# EUROPEAN PATENT APPLICATION

(11) **EP 1 897 613 A1**
(43) Date of publication of application: **12.03.2008**
(21) Application number: 05752135.3
(22) Date of filing: 23.05.2005
(51) Int. Cl.: B01J 23/755, B01J 21/04, C10G 45/36

(54) **NICKEL CATALYST, METHOD OF OBTAINING SAME AND USE THEREOF**

(71) Applicant: REPSOL YPF, 28046 Madrid (ES)
(72) Inventor: VIC BELLON, Sebastián, 28290 Las Matas (ES); MONJAS SERRANO, Carlos, 28042 Madrid (ES); MORENO RODRIGUEZ, Juan M., 28047 Madrid (ES); ROMERO PALAZON, Eduardo, 28935 Mostoles (ES); GÓMEZ MARTÍN, Juan Pedro, 28916 Leganés (ES)
(74) Representative: Carvajal y Urquijo, Isabel
(86) International application number: PCT/ES2005/000290
(87) International publication number: WO 2006/125832

(57) **Abstract**

The present invention relates to a catalyst of nickel on alumina, a process for obtaining it and use thereof. More specifically, the catalyst has a nickel content between 8 and 30% and it is prepared by means of the impregnation process starting from a shaped support formed by a special alumina having a specific X-ray diffraction pattern, a specific porous structure and acidity. The impregnating solution is formed by an organic nickel salt dissolved in an aqueous solution at a basic pH. This catalyst is useful in diolefin hydrogenation reactions in hydrocarbonated streams.

## Description

The present invention relates to a catalyst of nickel on alumina, a process for obtaining it and use thereof. More specifically, the catalyst has a nickel content between 8 and 30% and it is prepared by means of the impregnation process starting from a shaped support formed by a special alumina having a specific X-ray diffraction pattern, a specific porous structure and acidity. The impregnating solution is formed by an organic nickel salt dissolved in an aqueous solution at a basic pH. This catalyst is useful in diolefin hydrogenation reactions in hydrocarbonated streams.

### State of the Art

The evolution of fuel specifications involves a greater importance of all hydrotreatment reactions in the manufacture of gasoline and diesel oils. On the other hand, the hydrogenation of diolefin and monoolefin hydrocarbons is very useful in the petrochemical and refining industry because distillation products which cannot be directly used since they contain unsaturated hydrocarbons are obtained in conversion processes such as: thermal cracking, coking, visbreaking, catalytic cracking, steam-cracking. These products such as diolefins and alkenyl aromatic compounds are unstable, they can be easily oxidized and they tend to polymerize forming rubbers, causing problems of a gradual increase in the pressure drop in the reactor. The hydrogenation process is used to increase the stability of naphthas because the induction period increases and the rubber precursor content decreases without altering other valuable properties such as octane for example. In order to achieve this, it is necessary to carry out a selective hydrogenation which, in the case of alkenyl aromatic compounds, only hydrogenates the double bond without touching the aromatic ring, and also the hydrogenation of the double bond of the diolefins. Therefore, these conversion streams must be hydrogenated to eliminate these unstable compounds (Applied Heterogeneous Catalysis, J.L. Page, Editions Technip, 1987).

Different types of catalysts which allow optimizing these hydrogenation processes have been developed over the years for this process. Most of these catalysts use a metal with catalytic properties for hydrogenation, such as nickel and palladium, on a solid support such as alumina. The advantages of palladium over the nickel catalyst are its greater activity, selectivity and cycle length; on the other hand, its drawback is its higher cost and lower resistance to contaminants.

The properties which a good catalyst for hydrogenation must have are a combination or equilibrium between high active surface with a high reducibility, indicating optimal metal dispersion, and a limited and effective metal-support interaction. A drawback generally found in nickel-alumina catalysts is the formation of nickel aluminate in the surface of the support and although this aluminate exerts a stabilizing effect on nickel particles, its presence is unwanted because it is an inactive compound and therefore the active surface available for the reaction decreases.

The degree of nickel reduction in alumina-supported catalysts increases with the reduction temperature and with the nickel content (C.H. Bartholomew, J. of Catalysis, 45, 41-53(1976)). The calcination in air before the reduction step is at the expense of obtaining high dispersion, reducibility and high active surface in nickel-alumina catalysts; the calcination temperature after incorporating the nickel salt also affects the reducibility of nickel because a higher calcination temperature decreases the reducibility of nickel because it favors the interaction of nickel with alumina.

The support must have the following properties to obtain a good catalyst for diolefin hydrogenation: porous distribution suitable for minimizing inner diffusion, weak acidity which is unfavorable for polymerization reactions giving rise to the formation of insoluble rubbers. The acidity of alumina also has an important role in the characteristics of the catalyst because it affects its capacity to form bonds with active phase precursors, affecting metal dispersion, metal-support interaction and the activity of the catalyst.

Other properties also are: high thermal stability preventing the occurrence of non-active crystalline phases of the support. Optimal interaction between the support and the metal, this property affects dispersion, reducibility, activity and resistance to the agglomeration of active phases during the preparation of the catalyst and in the reaction. This interaction can be strongly affected by the calcination temperature of the support which in turn affects its acidity, porous structure and the physical properties.

These catalysts require a reduction step before putting the catalyst into contact with the hydrocarbon stream, this step being critical because the activity of the catalyst greatly depends on the extent of the reduction; in fact, the maximum initial activity of a catalyst coincides with the maximum metallic nickel dispersion in the surface of the catalyst. Metallic nickel dispersion is determined, among other techniques, by hydrogen chemisorption at 30°C and it can be expressed as moles of H2 adsorbed/g. Catalyst, % dispersion or active surface (m² nickel/g catalyst). There is an optimal temperature for catalyst reduction which produces the maximum active surface and which also depends on the nature and acidity of the support and which is much lower the more inert the support is, i.e. lower metal-support interaction; on the other hand, this weak metal-support interaction favors quick catalyst sintering because it favors the migration of nickel particles in the surface to form larger nickel agglomerates, decreasing the number of active centers or active surface.

Narayanan et al. (J. Chem. Soc. Faraday Trans., 185 (1989) 3785) studied the influence of several metal oxides used as catalyst supports on the hydrogenating activity of nickel. Their conclusion was that the reducibility and dispersion of nickel depends on the texture and structure properties of the support. Chen et al. (App. Catal. 73(1991)289) studied the effect of different alumina supports on the properties of supported nickel catalysts. They concluded that the metal dispersion and the maximum reduction temperature strongly depended on the type of alumina used.

J.P. Jacobs et al (Catal. Lett. 25(1994)315) found a correlation between the hydrogenating activity and the reducibility of nickel with the θ/γ phase ratio of the support in nickel catalysts prepared by the deposition of nickel acetylacetonate in vapor phase using the novel atomic layer epitaxy technique. The catalysts prepared by this technique increase their activity in toluene hydrogenation and the amount of nickel in the surface with the proportion of θ phase in the alumina in the studied range of 0 to 0.3 of θ/γ ratio. L.P. Lindfors (Catal. Lett. 28(1994)291), using the same nickel deposition technique, found a maximum activity of nickel/alumina catalysts for toluene hydrogenation with a θ/γ ratio of crystalline phases of alumina between 0.5 and 10 because an optimal interaction between nickel oxide and alumina is produced, which affect the size and growth of the nickel crystals produced during the reduction step.

In the Unilever patent (EP 0 290 100), a nickel upon theta-alumina catalyst is obtained with a high activity due to the greater nickel dispersion and to the absence of nickel aluminate formation. This nickel catalyst is prepared with a 100% θ phase transition alumina characterized by a specific X-ray diffraction pattern (peaks at 1.39; 2.01; 2.43; 2.72 and 2.85 x 10⁻¹⁰) and using nickel carbonate as the nickel salt for impregnation. This catalyst is particularly useful in hydrogenation processes for preparing white oils which are hydrodesulfurized in a first step using a nickel-molybdenum or cobalt-molybdenum catalyst and subsequently hydrogenated in a second step in the presence of a nickel-alumina catalyst. Solvent hydrogenation is also claimed.

Patent application ES 2,022,366 describes a catalyst useful for the hydrogenation of diolefins to monoolefins, formed by nickel and sulfur on an alumina support. This catalyst is characterized by having a pore volume between 1.4 and 3 cm³/g and at least 50% of this pore volume is provided by macropores with average diameters between 600 and 1500 Angstrom.

Patent application US 5,523,271 describes a catalyst useful for the simultaneous and selective hydrogenation of diolefins and nitriles. This catalyst is characterized in that the active metal is supported on a mixture of alumina and zeolite. Patent application ES 2,190,022 describes a process for the simultaneous and selective hydrogenation of diolefins and nitriles with several steps of mixing, reaction, washing and regeneration of the two reaction areas.

Patent application ES 2,105,150 describes a catalyst useful for the selective hydrogenation of diolefin and/or acetylene impurities in loads containing monoolefins. This catalyst is characterized by having a main metal of group VIII and an additional metal element of group III-A favoring the selectivity of the reaction without decreasing the activity of the base metal.

Patent application EP 0 011 906 describes a process for the selective hydrogenation of diolefins in pyrolysis gasoline in three reactors with product recirculation in the first two reactors. The catalyst used for this process is sulfurized nickel on alumina.

### Description of the Invention

The present invention relates to a new catalyst formed by nickel on alumina and its preparation process. According to a first essential aspect, the present invention relates to a catalyst comprising between 8 and 30% of nickel and between 60 and 90% of an alumina, characterized in that said alumina satisfies the following X-ray diffraction pattern:

| d (10⁻¹⁰m) | I/Iₒ | d (10⁻¹⁰ m) | I/Iₒ |
|---|---|---|---|
| 1.26 | 2-4 | 1.99 | 50-65 |
| 1.39 | 100 | 2.12 | 8-12 |
| 1.52 | 18 | 2.28 | 38 |
| 1.80 | 2-6 | 2.40 | 40-60 |
| 1.94 | 35-50 | 2.73 | 34 |
| | | 4.59 | 3 |

According to a preferred embodiment, the catalyst according to the present invention shows a high active surface comprised between 16 and 36 m² of metallic nickel/g catalyst, preferably 25, and a high reducibility, since 100% of nickel is reduced at temperatures under 360°C. According to another preferred embodiment, the catalyst according to the present invention has a pore volume range comprised between 0.5 and 1 cc/g and a pore distribution with a diameter comprised between 15 and 30 nm. These properties provide a catalyst with greater activity and cycle length in diolefin hydrogenation processes in refining and petrochemical streams. According to a preferred embodiment according to the present invention, the catalyst according to the present invention is used in fixed-bed reactors in the form of spheres and extruded in cylindrical or tubular shapes for diolefin hydrogenation processes in petroleum fractions.

According to another preferred embodiment, the catalyst according to the present invention has a BET specific surface area comprised between 80 and 150 m²/g.

According to a preferred embodiment according to the present invention, said alumina has a θ/γ phase ratio comprised between 0.25-0.67, preferably 0.4.

According to a second essential aspect, the present invention relates to a process for preparing a catalyst comprising the steps of:
a. obtaining an alumina
b. impregnating said alumina with an impregnating solution comprising an organic nickel compound;
c. drying the obtained mixture; and
d. calcining said mixture;
characterized in that said alumina satisfies the following X-ray diffraction pattern:

| d (10⁻¹⁰ m) | I/Iₒ | d (10⁻¹⁰ m) | I/Iₒ |
|---|---|---|---|
| 1.26 | 2-4 | 1.99 | 50-65 |
| 1.39 | 100 | 2.12 | 8-12 |
| 1.52 | 18 | 2.28 | 38 |
| 1.80 | 2-6 | 2.40 | 40-60 |
| 1.94 | 35-50 | 2.73 | 34 |
| | | 4.59 | 3 |

In order to obtain optimal impregnation of the alumina it is necessary for the alumina to have acidity, characterized according to the temperature programmed ammonia desorption test. Between 50 and 70% of ammonia is desorbed at a temperature under 350°C. The nickel salt used is preferably nickel formate. The use of this salt provides better properties of the final catalyst with respect to other conventional salts such as nickel nitrate. On the other hand, it has an environmental advantage because NOₓ is not generated in the calcination stage when the salt is decomposed. The impregnating solution is an aqueous ammonia solution with an ammonia content between 5 and 15%, preferably between 9 and 13%. The ammonia is mostly recovered in the drying stage between impregnations and returned to the process. The drying stage between impregnations is carried out at a temperature between 150 and 200°C. The calcination stage is carried out in a conventional rotary kiln at a temperature between 250 and 300°C.

Catalyst reduction is an important step in the start-up in the industrial unit. This reduction is carried out in a hydrogen flow at temperatures between 300 and 400°C.

According to a third essential aspect, the present invention relates to the use of this catalyst for the hydrogenation of diolefins in petroleum naphthas.

This example is illustrated with the following non-limiting examples.

### Examples

### Example 1

This example shows the importance of the preparation process and the use of the nickel impregnating solution compared to the conventional solutions using nickel nitrate.

An alumina support which had the following X-ray diffraction pattern was used to prepare catalyst 1 and 2:

| d (10⁻¹⁰ m) | I/Iₒ | d (10⁻¹⁰ m) | I/Iₒ |
|---|---|---|---|
| 1.26 | 2.7 | 1.99 | 59.5 |
| 1.39 | 100 | 2.12 | 9.9 |
| 1.52 | 18.1 | 2.28 | 38.2 |
| 1.80 | 3.3 | 2.40 | 47.7 |
| 1.94 | 43.6 | 2.73 | 34.6 |
| | | 4.59 | 3.5 |

In the temperature programmed ammonia desorption test, this alumina desorbed 64% of the ammonia at a temperature under 350°C. The specific surface area is 126 m²/g and the pore volume is 0.77 cc/g.

The features of the manufacturing process according to the invention (catalyst 1) compared to catalyst 2 using conventional methods is described below.

| Catalyst | Impregnating solution | Salt used | No. of impregnations | Drying temperature | Calcination temperature |
|---|---|---|---|---|---|
| 1 | Aqueous ammonia solution | Nickel formate | 3 | 180°C | 250-300°C |
| 2 | Aqueous solution | Nickel nitrate | 2 | 180°C | 400°C |

The following table shows the properties of a catalyst manufactured according to the invention (catalyst 1) and of catalyst 2 manufactured with the same support and having a similar nickel content (10-12 %w).

It can be observed from the table that catalyst 1 manufactured according to the invention has a much greater active surface as well as a greater metal dispersion and a lower temperature for reducing 100% of the nickel present in the catalyst.

| Catalyst | Nickel salt used | Active surface (m²/g catalyst) | Dispersion, % | Reducibility, Maximum temperature necessary for reducing 100% of the nickel |
|---|---|---|---|---|
| 1 | Nickel formate | 23 | 28 | 360°C |
| 2 | Nickel nitrate | 10 | 13 | 381°C |

### Example 2

This example reflects the advantage as regards the decrease in the production of nitrogen oxides (NOₓ) during catalyst preparation. The nitrogen which disappears from the catalyst in the calcination stage does so in the form of NOₓ. NOₓ generation causes higher emissions to the environment and may force the use of capturing systems so that they are not emitted outside the manufacturing plant.

The nitrogen content of the catalyst before and after the calcination step has been analyzed such that it is possible to know the amount of nitrogen that has disappeared from the catalyst and that will be emitted in the form of NOₓ. Table 2 summarizes the data for the same catalysts 1 and 2 used in example 1.

The table shows that the decrease in the nitrogen content of the catalyst is considerably higher (7.6:1 ratio) in the catalyst prepared with nickel nitrate, therefore the emissions will be equally higher.

| Catalyst | Nickel salt used | Nitrogen content before calcination, %w | Nitrogen content after calcination, %w | Nitrogen emitted in the calcination, kg of N / 100 kg of calcined catalyst |
|---|---|---|---|---|
| 1 | Nickel formate | 0.44 | 0.14 | 0.30 |
| 2 | Nickel nitrate | 2.90 | 0.62 | 2.28 |

### Example 3

This example shows the importance of the support used in the properties of the final catalyst.

Table 3 shows the properties of a catalyst manufactured according to the invention (catalyst 1) and of a catalyst manufactured starting from a γ-alumina support (catalyst 3) having stronger acid centers (74% acid centers desorbed at a temperature of 550°C in the temperature programmed ammonia desorption test). An alumina support which had the following X-ray diffraction pattern was used to prepare this catalyst 3:

| d (10⁻¹⁰ m) | I/Iₒ | d (10⁻¹⁰ m) | I/Iₒ |
|---|---|---|---|
| 1.40 | 100 | 2.39 | 70.9 |
| 1.52 | 22.2 | 2.78 | 29.8 |
| 1.98 | 77.6 | 4.55 | 7.0 |
| 2,28 | 41.6 | | |

The specific surface area is 291 m²/g and the pore volume is 0.38 cc/g.

The impregnating solution according to the invention was used in both cases.

It can be observed from the table that catalyst 1, manufactured according to the invention, has a much greater active surface as well as a greater metal dispersion.

| Catalyst | Active surface (m²/ g catalyst) | Dispersion, % |
|---|---|---|
| 1 | 23 | 28 |
| 3 | 17 | 23 |

These two catalysts were tested in a pilot plant using a pyrolysis gasoline as a feedstock the properties of which were the following: distillation curve (ASTM D86): 45-205°C, density: 0.856 g/cc, Sulfur: 120 ppm, diene value (UOP 326/82): 22.3 g/100g, bromine number (ASTM-D-1159): 44g/100g, styrene: 4.3 %w. The operating conditions used were:
P: 20 bar, T: 60°C, H2/HC: 150 NI/I

| CATALYST | 1 | 3 |
|---|---|---|
| | DIENE CONVERSION (%) | |
| LHSV (h⁻¹) | | |
| 2 | 96 | 44 |
| 4 | 93 | 38 |

It can be observed from the table that catalyst 1, according to the present invention, has a diene conversion that is between 2.2 and 2.5 times greater than catalyst 3, according to the spatial velocity used.

## Claims

1. A catalyst comprising between 8 and 30% of nickel and between 60 and 90% of an alumina, **characterized in that** said alumina satisfies the following X-ray diffraction pattern:
| d (10⁻¹⁰ m) | I/Iₒ | d (10⁻¹⁰ m) | I/Iₒ |
|---|---|---|---|
| 1.26 | 2-4 | 1.99 | 50-65 |
| 1.39 | 100 | 2.12 | 8-12 |
| 1.52 | 18 | 2.28 | 38 |
| 1.80 | 2-6 | 2.40 | 40-60 |
| 1.94 | 35-50 | 2.73 | 34 |
| | | 4.59 | 3 |

2. A catalyst according to claim 1, **characterized in that** said alumina has a θ/γ phase ratio phase comprised between 0.25 and 0.67, preferably 0.4

3. A catalyst according to any of the previous claims, **characterized in that** it desorbs between 55 and 70% of ammonia in the temperature programmed NH₃ desorption test at a temperature under 350°C.

4. A catalyst according to any of the previous claims, **characterized by** having a BET surface area comprised between 80 and 160 m²/ g of alumina.

5. A catalyst according to any of the previous claims, **characterized by** having a total pore volume between 0.5 and 1 cc/g, preferably 0.7 cc/g, the average diameter of these pores being between 15 and 30 nm, preferably 20 nm.

6. A catalyst according to any of the previous claims, **characterized in that** it has an active surface, expressed as m² of nickel/g of catalyst, comprised between 16 and 36, preferably 25.

7. A process for preparing a catalyst comprising the steps of:
a. obtaining an alumina;
b. impregnating said alumina with an impregnating solution comprising an organic nickel compound;
c. drying the obtained mixture; and
d. calcining said mixture;
**characterized in that** said alumina satisfies the following X-ray diffraction pattern:
| d (10⁻¹⁰ m) | I/Iₒ | d (10⁻¹⁰m) | I/Iₒ |
|---|---|---|---|
| 1.26 | 2-4 | 1.99 | 50-65 |
| 1.39 | 100 | 2.12 | 8-12 |
| 1.52 | 18 | 2.28 | 38 |
| 1.80 | 2-6 | 2.40 | 40-60 |
| 1.94 | 35-50 | 2.73 | 34 |
| | | 4.59 | 3 |

8. A process according to claim 7, **characterized in that** 100% of the nickel is reduced at a temperature under 365°C.

9. A process according to any of claims 7 and 8, wherein the impregnating solution is an aqueous solution, preferably an ammonia solution with a concentration of ammonia between 5 and 15%, preferably between 9 and 13%.

10. A process according to any of claims 7-9, wherein the organic nickel compound is nickel formate.

11. A process according to any of claims 7-10, **characterized in that** a reduced NOₓ emission is obtained during the calcination step.

12. The use of a catalyst according to any of claims 1-6 for the hydrogenation of diolefins in petroleum naphthas.
